# EUROPEAN PATENT APPLICATION

(11) **EP 4 535 328 A1**
(43) Date of publication of application: **09.04.2025**
(21) Application number: 22942963.4
(22) Date of filing: 25.05.2022
(51) Int. Cl.: G08G 1/09, G08G 1/16

(54) **SIGNAL RECOGNITION DEVICE, SIGNAL RECOGNITION METHOD, AND PROGRAM**

(71) Applicant: Hitachi, Ltd., Tokyo 100-8280 (JP)
(72) Inventor: HIROKI, Keiichi, Tokyo 100-8280 (JP)
(74) Representative: MERH-IP Matias Erny Reichl Hoffmann Patentanwälte PartG mbB
(86) International application number: PCT/JP2022/021400
(87) International publication number: WO 2023/228318

(57) **Abstract**

A signal recognition device includes: an image acquisition unit 101 configured to acquire an image captured by a camera provided in a moving body; a light emitting body detection unit 102 configured to detect a light emitting body from the acquired image; a self-position estimation unit 103 configured to estimate a position of the camera; a traffic light determination unit 108 configured to identify a light of a traffic light from the detected light emitting body based on the estimated position of the camera; and a signal aspect recognition unit 109 configured to read an aspect of the traffic light based on the identified light. Accordingly, it is possible to read the aspect of the traffic light not only in a bright place but also in a dark place.

## Description

### Technical Field

The present invention relates to a signal recognition device, a signal recognition method, and a program. The invention relates to a signal recognition device and the like particularly suitable for recognizing a railway signal.

### Background Art

For example, in a transportation business such as a railway, a driverless operation of a vehicle is attracting attention as a method for reducing cost and improving services. For railway operators and other businesses, personnel cost and training cost for drivers are high, and thus the railway operators have high expectations for reducing driver cost through the driverless operation. In terms of services, since there is no restriction on driver allocation, it is possible to increase a degree of freedom in operation and to be expected to improve convenience for users through more frequent operations.

In the railway, the driverless operation is realized in a route in which a vehicle travels on subways and elevated lines that do not have railroad crossings or the like. However, there are no examples of the technique being put into practical use on routes where people may enter, such as routes with railroad crossings or routes within a vehicle base where a worker is present. Further, in order to realize the driverless operation in such routes, it is necessary to detect a traffic light that gives an instruction to the driver to stop or imposes a speed limit, and to recognize an aspect. Therefore, it is considered to detect the traffic light by image processing based on an image captured by a camera and recognize the aspect. There is a general object recognition technique in which an object is recognized and detected by the image processing. In the object recognition according to the image processing, it is easier to recognize that a shape of the object is shown clearly in the image.

PTL 1 discloses an automatic detection device. The automatic detection device acquires a road image, vehicle position data at the time of imaging and vehicle posture data at the time of imaging, and acquires, from an information database, information data of a target facility that is a traffic safety facility positioned in a traveling direction of a vehicle at the time of imaging based on the vehicle position data and the vehicle posture data. The automatic detection device extracts a range in which the target facility is shown from the road image as a limited range based on the vehicle position data, the vehicle posture data, the position data included in the information data of the target facility, and size data included in the information data of the target facility. The automatic detection device detects the target facility by collating the limited range with feature data included in the information data of the target facility.

PTL 2 discloses a traffic signal recognition method. In the traffic signal recognition method, a captured image is acquired by a camera of a vehicle, a recognition target traffic light that faces a vehicle is searched from among a plurality of traffic lights, a region including the recognition target traffic light is calculated as an ROI from the captured image based on map information, a state of the vehicle, and a state of the camera, a prior probability distribution indicating a presence probability of the recognition target traffic light in each position in the ROI is calculated, a contrast of the image of the ROI is updated according to the prior probability distribution to generate a contrast update image, a feature point is extracted from the contrast update image to identify a region of a lighting portion of the recognition target traffic light in the ROI as a lighting region, and a lighting color of the recognition target traffic light is recognized based on a color of the identified lighting region.

### Citation List

### Patent Literature

PTL 1: JP2021-76884A
PTL 2: JP2018-63580A

### Summary of Invention

### Technical Problem

In order to safely decelerate and stop the vehicle, it is necessary to perform braking at an early timing. To achieve this, it is desirable to be able to detect and recognize a traffic light at a long distance. It is desirable to detect and recognize not only in a bright place, but also in a dark place such as at night or inside a tunnel.

However, a traffic light in a dark place is difficult to recognize because the shape of the object is not clearly shown. On the other hand, since light of the traffic light is a light emitting body, it is possible to recognize its position even at night, but it is difficult to recognize its size. A mechanism for distinguishing between the light of the traffic light and the light emitting body other than the traffic light is necessary.

An object of the invention to provide a signal recognition device, a signal recognition method, and a program capable of reading an aspect of a traffic light in a dark place as well as a bright place.

### Solution to Problem

In order to solve the above problems, the invention provides a signal recognition device including: an image acquisition unit configured to acquire an image captured by an imaging device provided in a moving body; a light emitting body detection unit configured to detect a light emitting body from the acquired image; a position estimation unit configured to estimate a position of the imaging device; an identification unit configured to identify a light of a traffic light from the detected light emitting body based on the estimated position of the imaging device; and a reading unit configured to read an aspect of the traffic light based on the identified light.

In addition, the invention provides a signal recognition method including: acquiring an image captured by an imaging device provided in a moving body; detecting a light emitting body from the acquired image; estimating a position of the imaging device; identifying a light of a traffic light from the detected light emitting body based on the estimated position of the imaging device; and reading an aspect of the traffic light based on the identified light.

Further, the invention provides a program for causing a computer to implement: an image acquisition function of acquiring an image captured by an imaging device provided in a moving body; a light emitting body detection function of detecting a light emitting body from the acquired image; a position estimation function of estimating a position of the imaging device; an identification function of identifying a light of a traffic light from the detected light emitting body based on the estimated position of the imaging device; and a reading function of reading an aspect of the traffic light based on the identified light.

### Advantageous Effects of Invention

According to the invention described in claim **1, it** is possible to provide a signal recognition device capable of reading an aspect of the traffic light in a dark place as well as a bright place.

According to the invention described in claim 2, it is possible to identify that, even a traffic light that displays an aspect of a signal using a plurality of lights can be identified as belonging to one traffic light.

According to the invention described in any one of claims 3 to 5, it is possible to more easily identify that a plurality of lights belong to one traffic light.

According to the invention described in claim 6, it is possible to identify that a plurality of lights belong to one traffic light without using a distance between the imaging device and the traffic light.

According to the invention described in claim 7, the light of the traffic light can be identified from the imaged light emitting body.

According to the invention described in claim 8 or 9, even if a measurement error occurs in a position and an orientation of the imaging device or the traffic light, the traffic light can be identified more accurately.

According to the invention described in claims 10 and 11, the light of the traffic light can be more accurately identified.

According to the invention described in claim 12, even if a plurality of lamps are turned on or blinking at one traffic light, the aspect of the traffic light can be read.

According to the invention described in claim 13, reading of the aspect of the traffic light becomes easier.

According to the invention described in claim 14, it is possible to provide a signal recognition method capable of reading the aspect of the traffic light not only in a bright place but also in a dark place.

According to the invention described in claim 15, a computer can be provided with a function capable of providing a signal recognition device capable of reading the aspect of the traffic light in a dark place as well as a bright place.

### Brief Description of Drawings

[FIG. 1] FIG. 1 is a diagram showing a hardware structure of a traffic light detection system according to an embodiment.
[FIG. 2] FIG. 2 is a block diagram showing a functional configuration of the traffic light detection system according to the embodiment.
[FIG. 3] FIG. 3 is a block diagram showing a functional configuration of a traffic light determination unit.
[FIG. 4] FIG. 4 is a flowchart showing an operation of the traffic light detection system.
[FIG. 5] FIG. 5 is a diagram showing a specific example of processing performed in step S409 of FIG. 4.
[FIG. 6] (a) and (b) of FIG. 6 are diagrams showing a specific example of processing performed in step S412.
[FIG. 7] FIG. 7 is a diagram showing a flow for a signal aspect recognition unit to recognize an aspect of a traffic light.
[FIG. 8] (a) of FIG. 8 is a diagram showing a horizontal pattern of lights. (b) of FIG. 8 is a diagram showing a vertical pattern of lights.
[FIG. 9] (a) to (f) of FIG. 9 are diagrams showing an example of a lighting pattern of lights.

### Description of Embodiments

Hereinafter, an embodiment of the invention will be described in detail with reference to the drawings.

Here, a traffic light detection system 1 which is attached to a railway vehicle, receives an image captured by a camera that monitors a front side, detects a traffic light to be read by the own train, and recognizes an aspect of the traffic light will be described as an example.

### <Overall Description of Traffic Light Detection System 1>

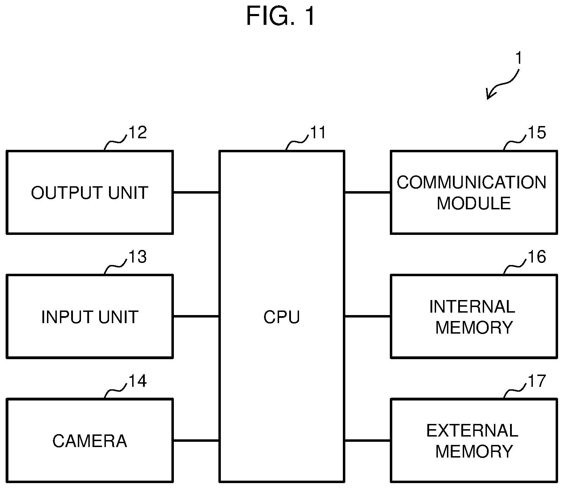

FIG. 1 is a diagram showing a hardware structure of the traffic light detection system 1 according to the embodiment.

The traffic light detection system 1 shown in the drawing is an example of a signal recognition device that recognizes an aspect of a traffic light. The traffic light detection system 1 includes a processor 11 that controls each unit through execution of a program, an output unit 12 that outputs information other than an image, an input unit 13 that inputs characters and the like, a camera 14 that captures an image, a communication module 15 used for communication with an external device, an internal memory 16 that stores system data and internal data, an external memory 17 as an auxiliary storage device, and the like.

The processor 11 executes programs such as basic software (OS) and application software. The processor 11 includes, for example, a central processing unit (CPU) or a graphics processing unit (GPU).

In the embodiment, the internal memory 16 is a semiconductor memory. The internal memory 16 includes a read only memory (ROM) storing a basic input output system (BIOS) and the like, and a random access memory (RAM) used as a main storage device. The processor 11 and the internal memory 16 constitute a computer. The processor 11 uses the RAM as a workspace of the program. The external memory 17 is a storage such as a hard disk drive (HDD) or a solid state drive (SSD), and stores firmware, application software, and the like.

The output unit 12 is, for example, an output device such as a liquid crystal display or an organic electro luminescent (EL) display. In this case, the information other than the image is displayed on the output unit 12. The output unit 12 is a speaker or the like, and may be a device that outputs a sound such as a voice or a notification sound.

The input unit 13 is an input device to be used when a user inputs characters and the like, and is, for example, a keyboard. The input unit 13 is an input device to be used for moving a cursor displayed on the output unit 12 and scrolling a screen, and is, for example, a touch pad. A mouse, a track ball, or the like may be used instead of the touch pad. The input unit 13 may be a device such as a button or a lever.

The camera 14 is an example of an imaging device, and captures a moving image or a still image. In this case, the camera 14 is provided in a driver seat or the like of a vehicle, and captures an image of a scene ahead in a traveling direction of the vehicle. The camera 14 includes an optical system for converging a light from an object to be imaged and an image sensor for detecting the light converged by the optical system. The optical system is implemented by a single lens or by combining a plurality of lenses. For example, a twin lens is used, which is made by combining two hemispherical lenses with their spherical sides facing each other. The image sensor includes a charge coupled device (CCD), a complementary metal oxide semiconductor (CMOS), and the like.

The communication module 15 is a communication interface for communicating with the outside.

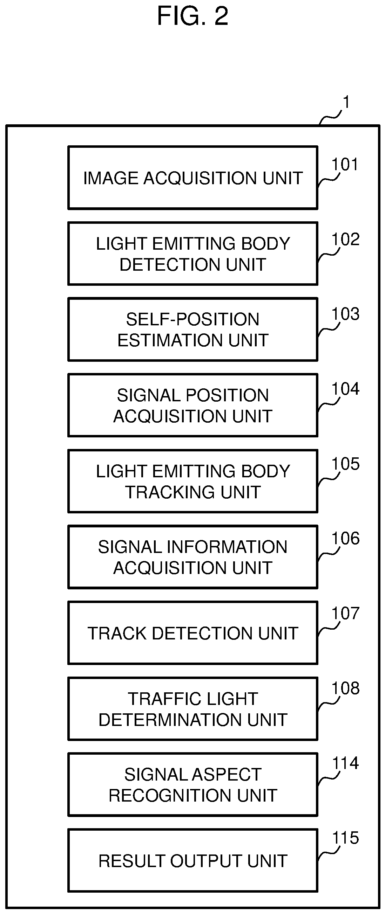

FIG. 2 is a block diagram showing a functional configuration of the traffic light detection system 1 according to the embodiment.

The shown traffic light detection system 1 includes an image acquisition unit 101, a light emitting body detection unit 102, a self-position estimation unit 103, a signal position acquisition unit 104, a light emitting body tracking unit 105, a signal information acquisition unit 106, a track detection unit 107, a traffic light determination unit 108, a signal aspect recognition unit 109, and a result output unit 110.

The image acquisition unit 101 acquires an image captured by the camera 14 provided in the vehicle.

The light emitting body detection unit 102 detects a light emitting body from the image acquired by the image acquisition unit 101. The light emitting body can be detected by an object detection technique according to image processing, a method for extracting pixels with high brightness in an image, or the like.

The self-position estimation unit 103 is an example of a position estimation unit and estimates a position of the camera 14. Here, the "position" is the position of the camera 14 on the earth. This position is not necessarily on the surface of the earth, and may be any position near the ground surface. That is, the positions on an elevated road, on a bridge pier, inside a tunnel, underground, and the like are also used. Specifically, the self-position estimation unit 103 acquires position coordinates on a map of the camera 14 from a global positioning system (GPS), a trip meter, or the like, and estimates the position.

The signal position acquisition unit 104 inquires of map information DB (database) to acquire position coordinates of the next traffic light to be read. For example, high-precision three-dimensional map data (HD map) can be used as the map.

The light emitting body tracking unit 105 stores, for each image frame, the position of the light emitting body detected by the light emitting body detection unit 102 in the image, and tracks the light emitting body over a plurality of successive frames. Further, a moving locus is recorded.

The signal information acquisition unit 106 acquires a shape of the traffic light to be read and information of possible aspect patterns to be taken, by inquiring of the map information DB. That is, the lighting pattern of each traffic light is held in the map information DB, and the signal information acquisition unit 106 acquires a lighting pattern. The "lighting pattern" is information related to an appearance of the light, such as a color of the light of the signal, presence or absence of blinking, a blinking cycle, and an interval and an arrangement when a plurality of lights are turned on. Possible aspect patterns may be obtained or estimated based on operation information for a section of line on which a train runs.

The track detection unit 107 detects a track in the image by image processing.

The traffic light determination unit 108 determines which of the light emitting bodies detected by the light emitting body detection unit 102 is the light emitting body (light) belonging to the traffic light to be read. At this time, the traffic light determination unit 108 uses the estimated position of the camera 14 as the information acquired by the self-position estimation unit 103 to the track detection unit 107. Based on the estimated position of the camera 14, the traffic light determination unit 108 functions as an identification unit that identifies the light of the traffic light from the detected light emitting bodies. At this time, the traffic light determination unit 108 can use camera parameters of the camera 14. Examples of the camera parameters include external parameters for converting world coordinates into camera coordinates, and internal parameters for converting camera coordinates into image coordinates.

The signal aspect recognition unit 109 compares a pattern such as a color, an arrangement, and a blinking state of the light emitting body (light) determined by the traffic light determination unit 108 with a possible aspect pattern of the traffic light acquired by the signal information acquisition unit 106, and recognizes the pattern that matches as a signal aspect. The signal aspect recognition unit 109 functions as a reading unit that reads an aspect of the traffic light from the identified light.

The result output unit 110 outputs an aspect recognition result which is a result of the signal aspect recognized by the signal aspect recognition unit 109.

Next, the traffic light determination unit 108 will be described in detail.

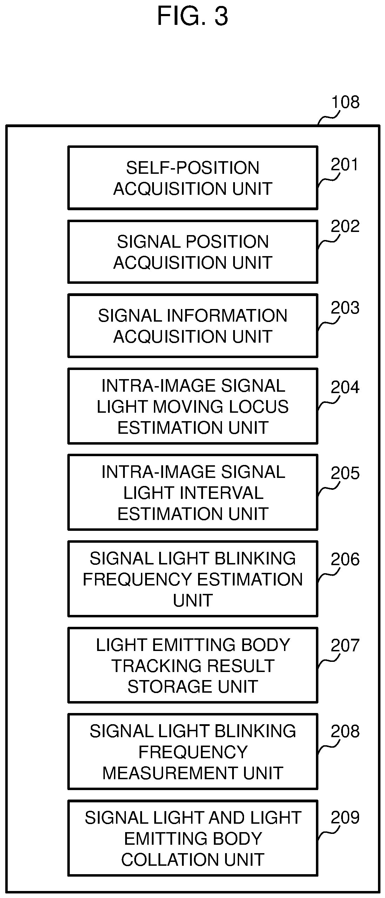

FIG. 3 is a block diagram showing a functional configuration of the traffic light determination unit 108.

The traffic light determination unit 108 includes a self-position acquisition unit 201, a signal position acquisition unit 202, a signal information storage unit 203, an intra-image signal light moving locus estimation unit 204, an intra-image signal light interval estimation unit 205, a signal light blinking frequency estimation unit 206, a light emitting body tracking result storage unit 207, a signal light frequency measurement unit 208, and a signal light and light emitting body collation unit 209.

The self-position acquisition unit 201 acquires position coordinates (longitude, latitude, and altitude) which change every moment from the self-position estimation unit 103, and stores a certain number of frames of images captured by the camera 14.

The signal position acquisition unit 202 acquires and stores, from the signal position acquisition unit 104, the position coordinates (latitude, longitude, altitude) of the traffic light that may appear in the image.

The signal information storage unit 203 acquires, from the signal information acquisition unit 106, the shape of the traffic light and information on possible aspect pattern for each of the traffic lights stored in the signal position acquisition unit 202, and stores the shape and the information.

The intra-image signal light moving locus estimation unit 204 estimates a moving locus corresponding to the certain number of frames of the light of the traffic light in the image based on the self-position coordinates of the certain frame stored in the self-position acquisition unit 201 and the position coordinates of the traffic light stored in the signal position acquisition unit 202.

The intra-image signal light interval estimation unit 205 estimates, based on the self-position coordinates of the certain frame stored in the self-position acquisition unit 201, the position coordinates of the traffic light stored in the signal position acquisition unit 202, and the signal information stored in the signal information storage unit 203, an interval between the lights in the image when one traffic light turns on two or more lights.

The signal light blinking frequency estimation unit 206 estimates a frequency component of the blinking of the light based on the signal information acquired by the signal information storage unit 203. At this time, as the signal information used for estimating the frequency component, a cycle in which the light blinks during a signal aspect and a flicker frequency when a signal light is a light-emitting diode (LED) are considered.

The light emitting body tracking result storage unit 207 acquires and stores the moving locus corresponding to a certain number of frames for each of all the light emitting bodies in the image recorded by the light emitting body tracking unit 105.

The signal light frequency measurement unit 208 measures the frequency component of a brightness of the light for each of all the light emitting bodies stored in the light emitting body tracking result storage unit 207. In order to measure the frequency component of the brightness of the light, a method for performing Fourier transform on a luminance value of a specific color component close to the color of the light is considered.

The signal light and light emitting body collation unit 209 compares an estimated value of an appearance in a screen of the traffic light, which is stored in the intra-image signal light moving locus estimation unit 204, the intra-image signal light interval estimation unit 205, and the signal light blinking frequency estimation unit 206, with an appearance of each light emitting body in the screen stored in the light emitting body tracking result storage unit 207 and the signal light frequency measurement unit 208. Further, the signal light and light emitting body collation unit 209 selects a light emitting body having the appearance closest to the traffic light by calculating both degrees of similarity, and outputs the selected light emitting body as a detection result of the traffic light.

### <Description of Operation of Traffic Light Detection System 1>

Next, the operation of the traffic light detection system 1 will be described.

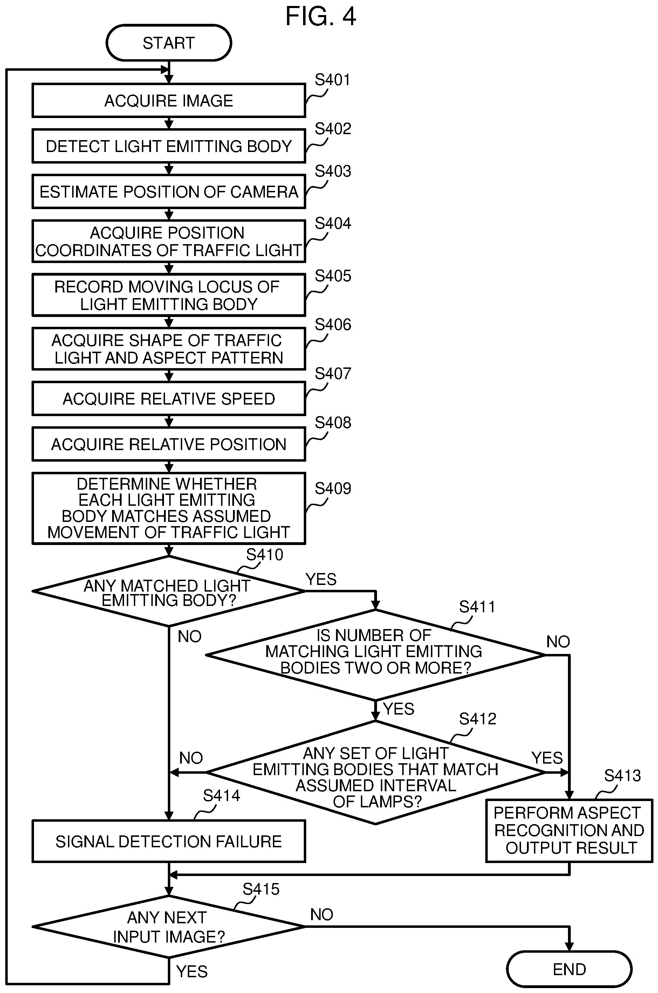

FIG. 4 is a flowchart showing the operation of the traffic light detection system 1.

First, the image acquisition unit 101 acquires an image from the camera 14 (step S401).

Next, the light emitting body detection unit 102 detects the light emitting body from the image acquired by the image acquisition unit 101 (step S402).

The self-position estimation unit 103 estimates a position of the camera 14 (step S403).

Further, the signal position acquisition unit 104 acquires the position coordinates of the traffic light to be read (step S404).

Meanwhile, the light emitting body tracking unit 105 tracks the position of the light emitting body detected by the light emitting body detection unit 102 in the image, and records a moving locus thereof (step S405).

The signal information acquisition unit 106 acquires information on the shape of the traffic light to be read and information on the possible aspect pattern (step S406).

Further, the traffic light determination unit 108 acquires a relative speed between the camera 14 and the traffic light to be read (step S407). This can be determined based on a change in the position of the camera 14 estimated in step S403 and the position coordinates of the traffic light acquired in step S404.

Further, the traffic light determination unit 108 acquires a relative position between the camera 14 and the traffic light to be read (step S408). This can be determined based on the position of the camera 14 estimated in step S403 and the position coordinates of the traffic light acquired in step S404. The traffic light determination unit 108 can determine both distances based on the relative position.

In the traffic light determination unit 108, the self-position acquisition unit 201 acquires the position of the camera 14. The signal position acquisition unit 202 acquires the position coordinates of the traffic light. Further, the relative speed and the relative position are calculated.

Next, the traffic light determination unit 108 determines whether all the light emitting bodies detected in step S402 match an assumed movement of the traffic light (step S409). This can be determined based on the moving locus recorded by the light emitting body tracking unit 105. The movement of the traffic light can be determined based on the relative speed obtained in step S407 or the relative position obtained in step S408, which will be described in detail later.

In the traffic light determination unit 108, based on the moving locus stored in the light emitting body tracking result storage unit 207, the intra-image signal light moving locus estimation unit 204 performs the processing of step S409.

As a result, when there is a matching light emitting body (Yes in step S410), the traffic light determination unit 108 determines whether two or more matching light emitting bodies are present (step S411).

When there are two or more matching light emitting bodies (Yes in step S411), the traffic light determination unit 108 determines whether there is a set of light emitting bodies that match an assumed light interval (step S412). This determination will be described later in detail, and is determined based on the information on the shape of the traffic light acquired in step S406. At this time, it can also be determined based on the information of the aspect pattern acquired in step S406. The aspect pattern is at least one of the cycle in which the light blinks, a color of the light, and a combination of the lights.

In the traffic light determination unit 108, the intra-image signal light interval estimation unit 205, the signal light blinking frequency estimation unit 206, the signal light frequency measurement unit 208, and the signal light and light emitting body collation unit 209 perform the processing of step S411 to step S412 based on the shape of the traffic light and the information on the possible aspect pattern stored in the signal information storage unit 203.

As a result, when there is a set of the light emitting bodies that match the assumed light interval (Yes in step S412) and when the number of light emitting bodies that match in step S410 is not two or more and is one (No in step S410), the signal aspect recognition unit 109 recognizes the aspect of the traffic light. That is, the signal aspect recognition unit 109 reads the aspect of the traffic light from the identified light. Further, the result output unit 110 outputs the aspect recognition result (step S413). Then, the processing proceeds to step S415.

When there is no matching light emitting body in step S410 (No in step S410) and when there is no set of the light emitting bodies matching the assumed light interval in step S412 (No in step S412), the traffic light determination unit 108 determines that the detection of the traffic light fails (step S414).

Further, the image acquisition unit 101 determines whether the next image is input (step S415).

Further, when the next image is input (Yes in step S15), the processing returns to step S401.

On the other hand, when no next image is input (No in step S415), a series of traffic light detection processing ends.

### <Detailed Description of Step S409>

Next, step S409 of FIG. 4 will be specifically described.

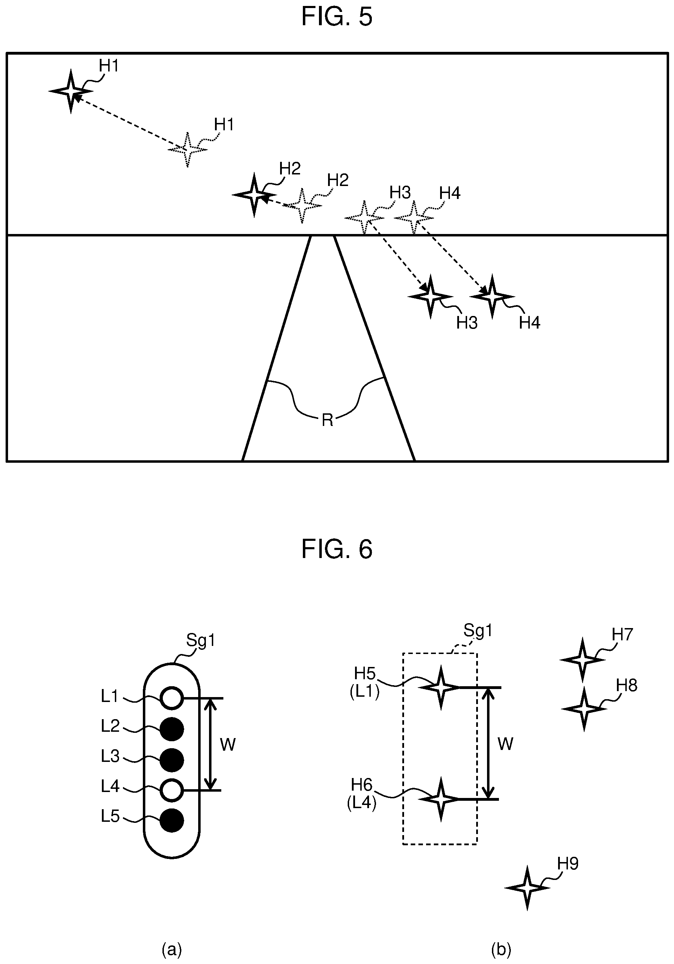

FIG. 5 is a diagram showing a specific example of the processing performed in step S409 of FIG. 4.

Here, a case in which light emitting bodies H1 to H4 are imaged in an image and the light of the traffic light is extracted from the image will be described.

The traffic light determination unit 108 identifies the light of the traffic light based on movements of the light emitting bodies H1 to H4 in the image. Specifically, the following method can be used.

First, there is a method for focusing on a moving direction of the light emitting bodies H1 to H4 in the image as the movements of the light emitting bodies H1 to H4.

In this method, the traffic light determination unit 108 estimates the moving direction, which is a direction in which the light of the traffic light moves in the image, and identifies the light based on the moving direction. That is, the relative position between the camera 14 and the traffic light changes as the vehicle travels. At this time, as the relative position changes, the light of the traffic light moves in the image. The moving direction can be estimated from a change in the relative position. That is, the traffic light determination unit 108 estimates the moving direction based on the change in the relative position between the camera 14 and the traffic light.

In FIG. 5, the light emitting bodies H1 to H4 are imaged in the image. In this case, the traffic light determination unit 108 determines the moving direction of the light emitting bodies H1 to H4 in the image based on the moving locus stored in the light emitting body tracking result storage unit 207. In FIG. 5, the moving direction is indicated by a dotted arrow. On the other hand, the traffic light determination unit 108 estimates the moving direction of the light of the traffic light in the image based on the relative position between the camera 14 and the traffic light. Further, when the moving directions of the two match each other, the traffic light determination unit 108 identifies the light emitting bodies H1 to H4 whose moving directions are the same as each other as the lights of the traffic light. That is, the traffic light determination unit 108 identifies the light of the traffic light based on the estimated moving direction and the moving directions of the light emitting bodies H1 to H4 as the movements of the light emitting bodies H1 to H4.

In addition, in another method, the traffic light determination unit 108 can estimate a moving speed, which is a speed at which the light moves in the image, based on the relative position and a speed of the vehicle, and identify the light based on the moving speed. That is, as described above, the relative position between the camera 14 and the traffic light changes as the vehicle travels. At this time, the light of the traffic light moves at a predetermined speed in the image according to the change of the relative position and the speed of the vehicle. Further, the moving speed can be estimated based on the change in the relative position and the speed of the vehicle. The moving speed of the vehicle can be determined by using information of the GPS or trip meter acquired by the self-position estimation unit 103.

In this case, the traffic light determination unit 108 determines the moving speeds of the light emitting bodies H1 to H4 in FIG. 5 in the image based on the moving locus stored in the light emitting body tracking result storage unit 207 and the speed of the vehicle. On the other hand, the traffic light determination unit 108 estimates the moving speed of the light of the traffic light in the image based on the relative position between the camera 14 and the traffic light and the speed of the vehicle. Then, when the moving directions of the two match each other, the traffic light determination unit 108 identifies that the light emitting body whose moving speeds are the same as each other as the light of the traffic light. That is, the traffic light determination unit 108 identifies the light of the traffic light based on the estimated speed direction and the moving speed of the light emitting body as the movements of the light emitting bodies H1 to H4.

The traffic light determination unit 108 may identify the light by further taking into consideration at least one of the cycle at which the light blinks, the interval between the lights, and the color of the light. That is, the cycle at which the light blinks is determined as the traffic light. Accordingly, the traffic light determination unit 108 can distinguish between the light of the traffic light and other light emitting bodies. The interval between the lights in one traffic light is determined. Therefore, the traffic light determination unit 108 can distinguish between the light in the traffic light and another light emitting body based on the interval between the light emitting bodies in the image. Further, the color of the light is determined as the traffic light. Accordingly, the traffic light determination unit 108 can distinguish between the light of the traffic light and other light emitting bodies. Further, the traffic light determination unit 108 is used in a so-called auxiliary manner in order to distinguish between the light of the traffic light and other light emitting bodies. Accordingly, reliability of identifying the light of the traffic light is improved. In addition, the traffic light determination unit 108 can also identify the light of the traffic light by further taking into consideration a direction in which the camera 14 captures an image. That is, the position of the traffic light in the image can be narrowed down by using the information in the direction in which the camera 14 captures an image.

### <Detailed Description of Steps S411 to S412>

Next, the processing of steps S411 to S412 in FIG. 4 will be specifically described.

In step S409, there is a case in which there are a plurality of light emitting bodies identified as the lights of the traffic light. That is, the traffic light determination unit 108 may detect lights of a plurality of traffic lights. In a railway traffic light, one traffic light may have a plurality of lights turned on or blinking. In such a case, the traffic light determination unit 108 may identify that the plurality of light emitting bodies are the lights of the traffic light.

In steps S411 to S412 in FIG. 4, the traffic light determination unit 108 determines whether the plurality of lights belong to one traffic light.

(a) and (b) of FIG. 6 are diagrams showing specific examples of the processing performed in step S412.

(a) of FIG. 6 shows a case in which a traffic light Sg1 is imaged and the lights L1 and L4 that are turned on by the traffic light Sg1 are identified. The traffic light Sg1 is a five-lamp traffic light in which five lights are turned on or blinking. (a) of FIG. 6 shows a case in which a first light L1 from the top and a fourth light L4 from the top are turned on and other lights L2, L3, and L5 are turned off. Here, it is assumed that the light L1 and the light L4 are imaged at a distance of an interval W in the image. In the drawing, "O" represents turning on, and "•" represents turning off.

Based on the distance between the camera 14 and the traffic light, the traffic light determination unit 108 identifies that the plurality of lights belong to one traffic light.

Specifically, the traffic light determination unit 108 estimates the interval between the plurality of lights in the image based on the distance. Then, based on the estimated interval, it is identified that the plurality of lights belong to one traffic light. That is, the traffic light determination unit 108 estimates the interval W between the light L1 and the light L4 in the image in (a) of FIG. 6. Further, when the interval between the light emitting bodies identified as the lights matches the estimated interval W, the traffic light determination unit 108 identifies that the plurality of lights belong to one traffic light.

(b) of FIG. 6 is a diagram showing the method.

Here, a case in which light emitting bodies H5 to H9 are imaged is shown. Further, a case in which the interval between the light emitting bodies H5 and H6 is W and the light emitting bodies H5 and H6 are identified as the lights L1 and L4 is shown. At this time, the direction in which the lights L1 and L4 are arranged may be considered. In this case, the lights L1 to L5 are arranged in an up-down direction. Therefore, the light emitting bodies H5 and H6 which are arranged in the same direction as this direction and have an interval of W are identified as the lights L1 and L4.

In addition, in another method, the traffic light determination unit 108 may estimate the size of the image captured by the traffic light in the image based on the distance, and identify that the plurality of lights belong to one traffic light based on the estimated size.

(b) of FIG. 6 also shows this method.

Here, a case in which light emitting bodies H5 to H9 are imaged is shown. Further, a case in which the light emitting bodies H5 and H6 are identified as the lights L1 and L4 of the traffic light is shown. At this time, the traffic light determination unit 108 estimates the size of the traffic light captured in the image based on the distance. In (b) of FIG. 6, the estimated size of the traffic light in the image is indicated by a dotted rectangle. Further, (b) of FIG. 6 shows a case in which the traffic light determination unit 108 selects the lights L1 and L4 as a set of lights matching the estimated size. Accordingly, the traffic light determination unit 108 can identify that the lights L1 and L4 belong to one traffic light.

There is a case in which the two traffic lights are in a position close to each other and the lights are close to each other on the image. However, even in this case, the lights of the respective traffic lights can be distinguished by a method for determining the moving direction and the moving speed of the light emitting body described in FIG. 5. That is, since the two traffic lights are at different positions, the moving direction and the moving speed of the lights are different. Therefore, it is possible to distinguish between the traffic lights. Further, it is possible to determine a combination of lights belonging to each traffic light by the method shown in FIG. 6.

In the above-described example, the map information acquired from the map information DB is used, but it is not essential to use the map information. In this case, the traffic light determination unit 108 can identify that the plurality of lights belong to one traffic light based on a width of a track (for example, a rail) R (see FIG. 5). In this case, the traffic light determination unit 108 uses information such as the width of the track and a height of the traffic light to estimate the size of the traffic light captured in the image. Further, it is identified that the plurality of lights belong to one traffic light based on the estimated size. The width of the track is detected by the track detection unit 107.

### <Detailed Description of Step S413>

Next, the processing of step S413 in FIG. 4 will be specifically described. In step S413 in FIG. 4, the signal aspect recognition unit 109 recognizes the aspect of the traffic light.

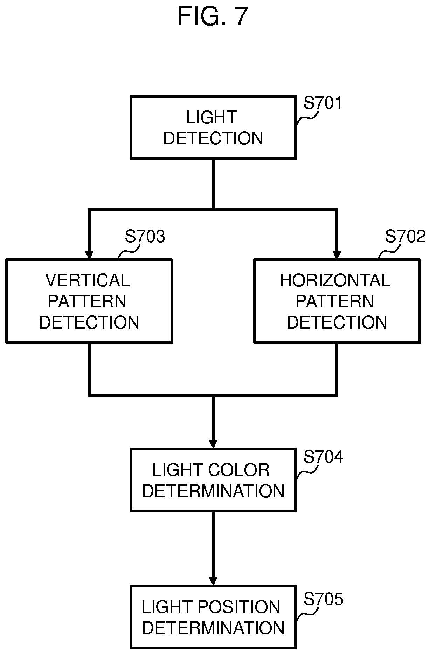

FIG. 7 is a diagram showing a flow for the signal aspect recognition unit 109 to recognize the aspect of the traffic light.

First, as described above, the traffic light determination unit 108 detects the light of the traffic light (step S701).

The signal aspect recognition unit 109 detects a horizontal pattern and a vertical pattern of the light (step S702 and step S703).

Further, the signal aspect recognition unit 109 determines the color of the light (step S704).

Further, the signal aspect recognition unit 109 determines the position of the light (step S705).

In this manner, the signal aspect recognition unit 109 reads the aspect of the traffic light from a combination of a plurality of lights.

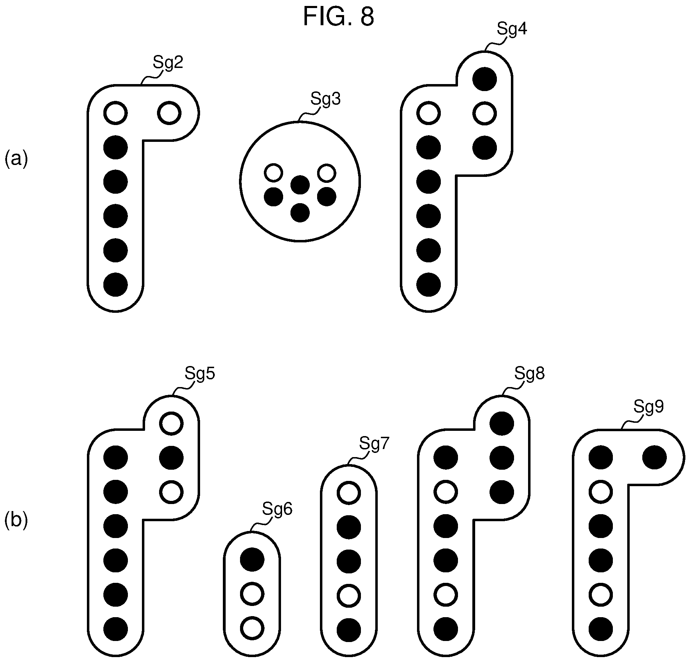

(a) of FIG. 8 is a diagram showing the horizontal pattern of the light. In the drawing, "O" represents turning on, and "•" represents turning off. The "horizontal pattern" is a pattern in the horizontal direction in which the light is turned on or blinking. Illustrated traffic lights Sg2 to Sg4 have a pattern in which two lights are turned on in the horizontal direction. In step S202, the signal aspect recognition unit 109 detects the lighting pattern.
(b) of FIG. 8 is a diagram showing the vertical pattern of the light. The "vertical pattern" is a pattern in the vertical direction in which the light is turned on or blinking. Illustrated traffic lights Sg5 to Sg9 have a pattern in which two lights are turned on in the vertical direction.

In step S413, the signal aspect recognition unit 109 detects, in the horizontal direction and the vertical direction, a pattern of a line of lights that are turned on or blinking in the horizontal direction and the vertical direction as a combination of lights that are turned on or blinking. That is, the signal aspect recognition unit 109 detects the horizontal pattern and the vertical pattern of a light that is turned on and blinking. Then, the signal aspect recognition unit 109 reads the aspect of the traffic light from the patterns. Accordingly, the signal aspect recognition unit 109 can read the aspect of the traffic light by interpreting the number of lights that are turned on or blinking and the combination of the positions of the lights.

In (a) to (b) of FIG. 8, a pattern in which two lights are turned on is shown. The number of lights that are turned on may be one or may be three or more. In addition, not only lights to be turned on but also lights to be blinking can be detected.

The position determination of the light is performed, for example, as left/right in the horizontal pattern and as upper/middle/lower in the vertical pattern. Accordingly, the signal aspect recognition unit 109 distinguishes the two lights positioned on the left and the right with the horizontal pattern. In addition, the signal aspect recognition unit 109 distinguishes between three lights positioned at the upper/middle/lower with the vertical pattern. When four or more lights are turned on, the lighting pattern is determined by using a combination of the light color and the horizontal pattern/vertical pattern.

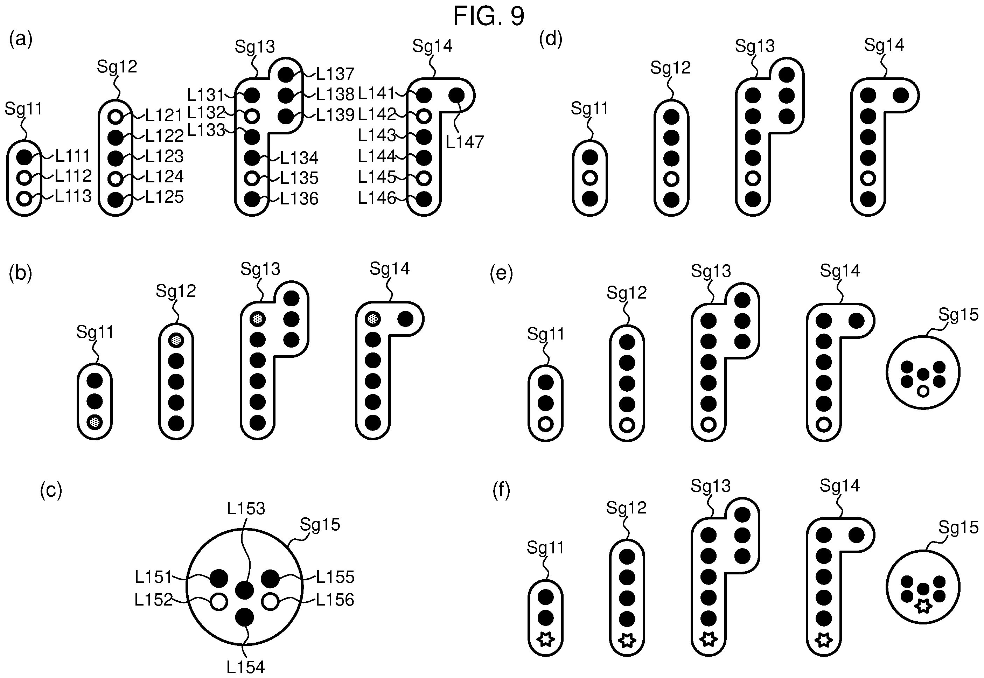

(a) to (f) of FIG. 9 are diagrams showing examples of lighting patterns of lights that can be determined as described above. In the drawing, "O" represents turning on, and "•" represents turning off. Further, "*" indicates blinking.

In the illustrated example, lighting patterns of the lights are shown for traffic lights Sg11 to Sg15.

(a) to (c) of FIG. 9 show lighting patterns of lights in a case in which passage is impossible. Further, the lighting pattern of (a) of FIG. 9 shows a case in which the traffic lights Sg11 to Sg14 are indicated by signal aspects with red lighting. In this case, in the traffic light Sg11, lamps L112 and L113 are turned on and others are turned off. In addition, in the traffic light Sg12, lamps L121 and L124 are turned on, and others are turned off. Further, in the traffic light Sg13, lamps L132 and L135 are turned on, and others are turned off. In the traffic light Sg14, lamps L142 and L145 are turned on, and others are turned off.

The lighting pattern of (b) of FIG. 9 shows a case in which the traffic lights Sg11 to Sg14 are indicated by signal aspects with purple lighting. In this case, in the traffic light Sg11, a lamp L113 is turned on and others are turned off. In addition, in the traffic light Sg12, a lamp L121 is turned on and others are turned off. Further, in the traffic light Sg13, a lamp L131 is turned on and others are turned off. Then, in the traffic light Sg14, a lamp L141 is turned on and others are turned off.

In the lighting pattern of (c) of FIG. 9, for the traffic light Sg15, a lamp L152 is turned on in yellow, a lamp L156 is turned on in red, and others are turned off.

(d) of FIG. 9 shows a lighting pattern of light in the case of temporary stop. In this case, the railway vehicle may pass after the temporary stop. The lighting pattern has a purpose of securing a vehicle interval, for example. Further, the lighting pattern of (d) of FIG. 9 shows a case in which the traffic lights Sg11 to Sg14 are indicated by signal aspects with red lighting. In this case, in the traffic light Sg11, the lamp L112 is turned on and others are turned off. In addition, in the traffic light Sg12, the lamp L124 is turned on and others are turned off. Further, in the traffic light Sg13, the lamp L135 is turned on and others are turned off. Then, in the traffic light Sg14, the lamp L145 is turned on and others are turned off.

(e) of FIG. 9 shows a lighting pattern of the light in the case of a warning.

The lighting pattern of (e) of FIG. 9 shows a case in which the traffic lights Sg11 to Sg15 are indicated by signal aspects with yellow lighting. In this case, in the traffic light Sg11, the lamp L113 is turned on and others are turned off. In addition, in the traffic light Sg12, the lamp L125 is turned on and others are turned off. Further, in the traffic light Sg13, a lamp L136 is turned on and others are turned off. Then, in the traffic light Sg14, a lamp L146 is turned on and others are turned off. Further, in the traffic light Sg15, a lamp L154 is turned on and others are turned off.

(f) of FIG. 9 shows a lighting pattern of the light in the case of a preliminary warning.

The lighting pattern of (f) of FIG. 9 shows a case in which the traffic lights Sg11 to Sg15 are indicated by signal aspects with yellow blinking. In this case, in the traffic light Sg11, the lamp L113 blinks and others are turned off. In addition, in the traffic light Sg12, the lamp L125 blinks, and others are turned off. Further, in the traffic light Sg13, the lamp L136 blinks, and the others are turned off. Then, in the traffic light Sg14, the lamp L146 blinks, and others are turned off. Further, in the traffic light Sg15, the lamp L154 blinks, and others are turned off.

### <Description of Effects>

According to the traffic light detection system 1 described above, the following effects are obtained.

To achieve a driverless railway, it is necessary to detect a traffic light and recognize an aspect. In order to achieve this, in the embodiment, an image recognition technique is used. In the image recognition technique, there is an advantage in that a price of a sensor (in this case, for example, the camera 14) is low and there is no need to add a hand to a detection target, which is excellent in introduction cost. In this case, there is a problem that it is difficult to recognize a traffic light in dark places such as inside tunnels or at night, but in the embodiment, the lights of the traffic light, which are light emitting bodies, are recognized and the aspect is determined by image classification. In addition, in the embodiment, the presence of light emitting bodies such as headlights and streetlights in the railway line environment can lead to erroneous recognition. The problem is solved by identifying the lights of the traffic light from among the light emitting bodies. Further, even when there are a plurality of traffic lights in an image, it is possible to distinguish the traffic lights from each other and select an signal to be read for an aspect.

Further, the aspects of railway traffic lights have different characteristics from automatic vehicle signals, as shown in (1) to (3) below. Therefore, it is difficult to apply a signal recognition technique for an existing automatic vehicle. That is, in the signal recognition for an automatic vehicle, only the color and the shape of the light may be determined. For railway traffic lights, this alone is not enough.
(1) There is a chance that a plurality of lights are turned on.
(2) The position of the light has a meaning.
(3) There are a plurality of lights of the same color.

In the embodiment, in order to read an aspect of a traffic light, not only the color of the light but also the combination of the number and the position of the lights to be turned on is interpreted to perform the recognition of the aspect. Therefore, even when the traffic light has the characteristics (1) to (3), the aspect of the traffic light can be read.

There is a method for predicting an appearance position of a traffic light using map information, but there are problems (4) and (5) below.

(4) The influence of a measurement error of position information is large. In particular, the influence of the error of an orientation (direction) of the camera 14 is large.

(5) Even when the appearance position is predicted, an external shape of the traffic light is difficult to see at night, and it is necessary to recognize only the light. A street light, a headlight of an oncoming train, or the like becomes a false detection factor.

Among these, (5) is the same as the above problem and can be solved in the embodiment.

Regarding (4), in the embodiment, the problem can be solved as follows.

An appearance of the traffic light is expressed as a composite condition of a position of the light in the image, a time change, a movement of the light according to a train speed, an interval between the lights, a color of the light, and a blinking cycle of the light. In the embodiment, among the detected lights, a combination of lights close to the estimated appearance is recognized as the traffic light and the aspect is read. That is, the movement of the light, the interval between the lights, the color of the light, the blinking cycle of the light, and the like according to the time change and the train speed are all features that are robust to a measurement error in position and orientation, as well as to the dark place. That is, this is determined by the relative position between the camera 14 and the traffic light, and is less likely to be affected by a measurement error of the position information of the vehicle or an error of the position coordinates of the traffic light. By using these features, the problem of (4) can be solved. If the information such as the shape of the traffic light, its installation height, the assumed aspect, and a zebra pattern on a back panel can be obtained from an HD map or an external DB, the information can be used to modify the conditions.

### <Description of Signal Recognition Method>

Here, the processing performed by the traffic light detection system 1 can be considered to be a signal recognition method including: acquiring an image captured by the camera 14 provided in a vehicle; detecting a light emitting body from the acquired image; estimating a position of the camera 14; identifying a light of a traffic light from the detected light emitting body based on the estimated position of the camera 14; and reading an aspect of the traffic light based on the identified light.

### <Description of Program>

Processing performed by the traffic light detection system 1 according to the embodiment described above is implemented by cooperation of software and hardware resources. That is, a processor such as a CPU provided in the traffic light detection system 1 executes a program for implementing each function of the traffic light detection system 1, and implements the respective functions.

Therefore, processing performed by the traffic light detection system 1 in the embodiment can also be seen as a program for enabling a computer to implement: an image acquisition function of acquiring an image captured by the camera 14 provided in a vehicle; a light emitting body detection function of detecting a light emitting body from the acquired image; a position estimation function of estimating a position of the camera 14; an identification function of identifying a light of a traffic light from the detected light emitting body based on the estimated position of the camera 14; and a reading function of reading an aspect of the traffic light based on the identified light.

The program for implementing the embodiment may be provided by being stored in a recording medium such as a CD-ROM, as a matter of course, provided to a communication unit.

The traffic light detection system 1 described above can be particularly suitably used to recognize a railway traffic light. However, the invention is not limited thereto, and may be applied to a case in which a signal for an automatic vehicle or the like is recognized. That is, the invention can be applied not only to a railway vehicle but also to a moving body such as an automatic vehicle.

The traffic light detection system 1 described above can be installed in a ground facility that can be mounted on a moving body such as a railway vehicle. In this case, the camera 14 of FIG. 1 needs to be mounted on a moving body, but the processor 11, the output unit 12, the input unit 13, the communication module 15, the internal memory 16, and the external memory 17 may be ground facility.

Although the embodiment is described above, the technical scope of the invention is not limited to the scope described in the above embodiment. It is apparent from the description of the scope of the claims that various modifications and improvements are added to the above embodiment.

### Reference Signs List

1: traffic light detection system
101: image acquisition unit
102: light emitting body detection unit
103: self-position estimation unit
104: signal position acquisition unit
105: light emitting body tracking unit
106: signal information acquisition unit
107: track detection unit
108: traffic light determination unit
109: signal aspect recognition unit
110: result output unit
Sg1 to Sg9, Sg11 to Sg15: traffic light
H1 to H9: light emitting body
L1 to L5, L111 to L113, L121 to L125, L131 to L139, L141 to L147, L151 to L156: light

## Claims

1. A signal recognition device comprising:
an image acquisition unit configured to acquire an image captured by an imaging device provided in a moving body;
a light emitting body detection unit configured to detect a light emitting body from the acquired image;
a position estimation unit configured to estimate a position of the imaging device;
an identification unit configured to identify a light of a traffic light from the detected light emitting body based on the estimated position of the imaging device; and
a reading unit configured to read an aspect of the traffic light based on the identified light.

2. The signal recognition device according to claim 1, wherein
the identification unit identifies that a plurality of lights belong to one traffic light, and
the reading unit reads the aspect from a combination of the plurality of lights.

3. The signal recognition device according to claim 2, wherein
the identification unit identifies that the plurality of lights belong to one traffic light based on a distance between the imaging device and the traffic light.

4. The signal recognition device according to claim 3, wherein
the identification unit estimates an interval between the plurality of lights in the image based on the distance, and identifies that the plurality of lights belong to one traffic light based on the estimated interval.

5. The signal recognition device according to claim 3, wherein
the identification unit estimates a size of the traffic light captured in the image based on the distance, and identifies that the plurality of lights belong to one traffic light based on the estimated size.

6. The signal recognition device according to claim 2, wherein
the moving body is a railway vehicle, and
the identification unit identifies that the plurality of lights belong to one traffic light based on a width of a track.

7. The signal recognition device according to claim 1, wherein
the identification unit identifies the light based on a movement of the light emitting body in the image.

8. The signal recognition device according to claim 7, wherein
the identification unit estimates a moving direction which is a direction in which the light moves in the image, and identifies the light based on the estimated moving direction and a moving direction of the light emitting body as the movement of the light emitting body.

9. The signal recognition device according to claim 7, wherein
the identification unit estimates a moving speed which is a speed at which the light moves in the image, and identifies the light based on the estimated moving speed and a moving speed of the light emitting body as the movement of the light emitting body.

10. The signal recognition device according to claim 8 or 9, wherein
the identification unit identifies the light by further taking into consideration at least one of a cycle at which the light blinks, an interval between the lights, and a color of the light.

11. The signal recognition device according to claim 8 or 9, wherein
the identification unit identifies the light by further taking into consideration a direction in which the imaging device captures an image.

12. The signal recognition device according to claim 1, wherein
the reading unit reads the aspect of the traffic light from a combination of a plurality of the lights.

13. The signal recognition device according to claim 12, wherein
the reading unit reads the aspect of the traffic light from a horizontal pattern and a vertical pattern as the combination, the horizontal pattern being a pattern in a horizontal direction in which the light is turned on or blinking, and the vertical pattern being a pattern in a vertical direction in which the light is turned on or blinking.

14. A signal recognition method comprising:
acquiring an image captured by an imaging device provided in a moving body;
detecting a light emitting body from the acquired image;
estimating a position of the imaging device;
identifying a light of a traffic light from the detected light emitting body based on the estimated position of the imaging device; and
reading an aspect of the traffic light based on the identified light.

15. A program for causing a computer to implement:
an image acquisition function of acquiring an image captured by an imaging device provided in a moving body;
a light emitting body detection function of detecting a light emitting body from the acquired image;
a position estimation function of estimating a position of the imaging device;
an identification function of identifying a light of a traffic light from the detected light emitting body based on the estimated position of the imaging device; and
a reading function of reading an aspect of the traffic light based on the identified light.
